# EUROPÄISCHE PATENTSCHRIFT

(11) **EP 3 140 069 B1**
(45) Veröffentlichungstag und Bekanntmachung des Hinweises auf die Patenterteilung: **05.03.2025**
(21) Anmeldenummer: 15719652.8
(22) Anmeldetag: 22.04.2015
(51) Int. Cl.: B23K 9/00, B23K 9/20, B23K 11/00, B23K 11/06, B23K 11/11, B23K 11/16, B23K 11/25, B23K 11/30, B23K 11/34, B23K 9/235

(54) **VERFAHREN UND VORRICHTUNG ZUM FÜGEN EINES VERBUNDBLECHBAUTEILS MIT EINEM WEITEREN BAUTEIL**
METHOD AND DEVICE FOR JOINING A COMPOSITE SHEET METAL COMPONENT TO ANOTHER COMPONENT
PROCÉDÉ ET DISPOSITIF POUR L'ASSEMBLAGE D'UN ÉLÉMENT STRUCTURAL EN TÔLE COMPOSITE AVEC UN AUTRE ÉLÉMENT STRUCTURAL

(30) Priorität: 09.05.2014 DE 102014208708
(43) Veröffentlichungstag der Anmeldung: 15.03.2017
(73) Patentinhaber: Volkswagen Aktiengesellschaft, 38440 Wolfsburg (DE)
(72) Erfinder: VOIGT, Alexander, 04668 Parthenstein (DE)
(86) Internationale Anmeldenummer: PCT/EP2015/058642
(87) Internationale Veröffentlichungsnummer: WO 2015/169588

(56) Entgegenhaltungen:
- WO-A1-2013/020636
- FR-A1- 2 709 083
- FR-A3- 2 638 668
- JP-A- S61 115 687
- US-A- 3 337 711
- US-A- 4 009 362
- US-A- 4 650 951

## Beschreibung

Die Erfindung betrifft ein Verfahren zum Fügen eines ersten Bauteils mit einem zweiten Bauteil an einer Fügestelle des ersten Bauteils, wobei das erste Bauteil zumindest ein im Wesentlichen flächig ausgebildetes erstes Bauelement, ein im Wesentlichen flächig ausgebildetes zweites Bauelement und eine zumindest bereichsweise zwischen den beiden Bauelementen angeordnete kunststoffaufweisende Zwischenschicht aufweist.

Im Automobilbau sind Leichtbaukonzepte, beispielsweise basierend auf Aluminiumwerkstoffen oder Verbundblechbauteilen, bekannt. Die Kombination aus hochfesten Stählen für crashrelevante Bauteile mit mehrschichtigen Verbundblechen für großflächige Bauteile stellt ein insbesondere dem Einsatz von Aluminiumwerkstoffen gegenüber wirtschaftlich günstigeres Leichtbaukonzept, insbesondere im Karosseriebau, dar. Verbundbleche bestehen üblicherweise aus dünnen, beispielsweise 0,2 mm bis 0,3 mm dünnen, Deckblechen aus Stahl und einer kunststoffaufweisenden Zwischenschicht, beispielsweise aus thermoplastischem Kunststoff, mit einer Dicke von üblicherweise zwischen 0,2 mm und 1,5 mm. Im Vergleich zu anderen bekannten Karosserieblechen ist das Flächengewicht dabei deutlich geringer. Ein weiterer Vorteil derartiger Verbundblechbauteile ist deren hohe Biegefestigkeit.

Die zwischen den beiden dünnen Deckblechen aus Stahl angeordnete Zwischenschicht ist elektrisch isolierend und somit für das Widerstands-, Lichtbogen- und Strahlschweißen nicht geeignet. Für den Einsatz derartiger Verbundblechbauteile im Karosseriebau müssen somit großserientaugliche Fügetechnologien weiterentwickelt werden. Thermische Fügeprozesse sind jedoch aufgrund der Zwischenschicht nicht prozesssicher einsetzbar. Aufgrund der hohen Prozesstemperaturen kommt es zu einer starken Schaum- und Spritzerbildung sowie zur Schädigung des Verbundblechbauteils. Ein stoffschlüssiges Anbringen von blechartigen Bauteilen sowie auch von Funktionselementen, beispielsweise Verbindungselementen, wie Bolzen und Muttern, ist ebenfalls aufgrund der Zwischenschicht nicht möglich. Beim mechanischen Fügen von Funktionselementen, beispielsweise Verbindungselementen, führt die Kunststoffzwischenschicht zu einer Verringerung der Verbindungsfestigkeit. Die im Fügeprozess erzeugte Klemmkraft zwischen dem Verbundblechbauteil und einem Funktionselement kann sich im KTL-Prozess bei Temperaturen im Bereich von ca. 180°C durch Kriechvorgänge in dem Werkstoff der Zwischenschicht abbauen.

Blechförmige Bauteile werden nach heutigem Stand der Technik daher bevorzugterweise mechanisch mit dem Verbundblechbauteil gefügt. Fügeverfahren zum Verbinden von Verbundblechbauteilen mit Funktionselementen, beispielsweise Verbindungsmitteln, wie Bolzen und Muttern, sind im Stand der Technik noch nicht bekannt.

### Stand der Technik

Um mehrschichtige Verbundbleche zu verschweißen, ist aus der DE 101 11 567 A1 bereits bekannt, Bauteile partiell ohne isolierende Zwischenschicht herzustellen. An diesen Stellen ist das Widerstandspunktschweißen möglich.

Aus der DE 10 2011 054 362 A1 ist ein Verfahren zur Herstellung eines Verbundblechteils mit einem metallischen Randbereich bekannt, wobei es zwei äußere Deckbleche aus Metall und mindestens eine zwischen den Deckblechen angeordnete Schicht, bestehend aus einem Kunststoff, aufweist.

In der WO 2013/020 636 A1 (auf dem der Oberbegriff des Anspruchs 1 basiert) wird ein Verfahren zum Fügen von blechartigen Bauelementen mit Zwischenschicht aus thermoplastischem Kunststoff zur Vorbereitung einer Fügestelle beschrieben. Dabei wird vorgeschlagen, die Zwischenschicht bereichsweise aufzuschmelzen und zu verdrängen und mittels Schweißen eine stoffschlüssige Verbindung der beiden Bauelemente herzustellen. Hierfür wird nach Verdrängen der Zwischenschicht in einem Bereich ein Schweißstrom angelegt, bis sich zumindest eines der beiden Bauelemente bis über dessen Schmelzpunkt erhitzt und teilweise verflüssigt. Somit kann eine stoffschlüssige Verbindung zwischen den beiden Bauelementen hergestellt werden.

Die US 4,650,951 A beschreibt ein Verfahren zum Widerstandsschweißen von zwei Laminaten, wobei jedes Laminat eine Struktur bestehend aus zwei Metallschichten und einer dazwischen angeordneten Isolierschicht aufweist.

Die FR 2 638 668 A1 wird ein Verfahren zum Verschweißen von zwei Komposit-Platten beschrieben, welche jeweils zwischen zwei Metallschichten eine elektrisch isolierende Polymerschicht aufweisen.

### Darstellung der Erfindung: Aufgabe, Lösung, Vorteile

Aufgabe der vorliegenden Erfindung ist es, ein Verfahren zum Fügen eines mehrschichtigen Bauteils mit einem weiteren Bauteil, wobei eine Zwischenschicht des mehrschichtigen Bauteils aus einer kunststoffaufweisenden Zwischenschicht besteht, derart weiter zu verbessern, dass die Fügestellenvorbereitung am mehrschichtigen Bauteil schnell und kostengünstig durchgeführt werden kann.

Die Lösung dieser Aufgabe erfolgt durch die in Anspruch 1 angegebenen Merkmale.

Es wird ein Verfahren zum Fügen eines ersten Bauteils mit einem zweiten Bauteil an einer Fügestelle des ersten Bauteils vorgesehen. Das erste Bauteil weist zumindest ein flächig ausgebildetes erstes Bauelement und ein flächig ausgebildetes zweites Bauelement sowie eine zumindest bereichsweise zwischen den beiden Bauelementen angeordnete kunststoffaufweisende Zwischenschicht auf.

Erfindungsgemäß ist das erste Bauteil somit mehrschichtig, bevorzugterweise als Verbundblechbauteil, ausgebildet. Unter flächiger Ausbildung ist im Sinne der Erfindung zu verstehen, dass die Ausdehnung in Längs- und/oder Breitenrichtung größer als die Dicke des Bauteils ist. Beispielsweise handelt es sich bei den beiden Bauelementen des ersten Bauteils um blechartige, bevorzugt stahlaufweisende, Bauelemente. Die kunststoffaufweisende Zwischenschicht ist elektrisch isolierend und bevorzugterweise elastisch oder thermoplastisch. Besonders bevorzugterweise besteht die kunststoffaufweisende Zwischenschicht aus Polyethylen oder Polyamid oder aus einer Kombination aus Polyethylen und Polyamid.

Das erfindungsgemäße Verfahren zum Fügen beziehungsweise Verbinden der beiden Bauteile im Bereich der Fügestelle des ersten Bauteils sieht die Schritte a) bis d) gemäß Anspruch 1 vor. Unter Verbinden von Bauteilen ist im Sinne der Erfindung ein Fügen der Bauteile zu verstehen.

Die Schritte a) bis d) können nacheinander sowie auch zumindest teilweise parallel, beziehungsweise überlappend, ausgeführt werden. Beispielsweise könnten die Schritte a) und b) zumindest teilweise überlappend durchgeführt werden. Bevorzugterweise werden die Schritte a) bis d) in der vorgenannten Reihenfolge durchgeführt.

Unter einem Kontakt zwischen den beiden Bauelementen im Bereich der Fügestelle ist zu verstehen, dass sich die beiden Bauelemente in diesem Bereich berühren, da durch die Erwärmung und Druckausübung auf die beiden Bauelemente in diesem Bereich die Zwischenschicht verdrängt ist. Durch Anlegen der elektrischen Spannung in Schritt c) entsteht somit ein elektrischer Kontakt zwischen den beiden Bauelementen. Somit ist bevorzugterweise vorgesehen, dass zumindest Schritt c) erst dann ausgeführt wird, beziehungsweise erst dann eine elektrische Spannung an die beiden Bauelemente angelegt wird, wenn der Kontakt zwischen den beiden Bauelementen hergestellt ist.

Dabei wird die Spannung in Schritt c) derart gesteuert, dass eine Temperatur im Kontaktbereich zwischen dem ersten Bauelement und dem zweiten Bauelement nicht über eine vorgegebene Temperaturschwelle ansteigt. Dabei ist vorgesehen, dass die vorgegebene Temperaturschwelle kleiner als der Schmelzpunkt eines Materials des ersten Bauelementes sowie auch kleiner als der Schmelzpunkt eines Materials des zweiten Bauelementes ist.

Die Materialien der beiden Bauelemente werden somit nicht durch die aufgrund des Stromflusses erzeugte Wärme im Kontaktbereich verflüssigt. Bevorzugterweise ist somit auch keine teilweise beziehungsweise bereichsweise Verflüssigung dieser Materialien vorgesehen. Das Material beider Bauelemente bleibt bei Stromzuführung und die dadurch resultierende Erwärmung im festen Zustand. Aufgrund der durch die Stromzuführung resultierenden Erwärmung und der Ausübung der Druckkraft auf eines oder beide Bauelemente werden die beiden Bauelemente im Kontaktbereich aneinander geheftet. Ein Verschweißen der beiden Bauelemente, wobei die Temperatur im Kontaktbereich über den Schmelzpunkt der Materialien der beiden Bauelemente ansteigt, um eine stoffschlüssige Verbindung zwischen den Bauelementen und diesem Bereich herzustellen, ist somit nicht vorgesehen.

Dadurch, dass die beiden Bauelemente im Kontaktbereich durch die Stromzuführung lediglich soweit erwärmt werden, dass sich das Material der beiden Bauelemente nicht verflüssigt, kann eine möglichst schnelle und kostengünstige Verbindung und somit Fügestellenvorbereitung bereitgestellt werden. Aufgrund der relativ niedrigen Temperatur kann die Taktzeit der Fügestellenvorbereitung erheblich gesteigert werden. Des Weiteren wird die Abnutzung der für das Verfahren verwendeten Werkzeuge, beispielsweise Kappen oder Elektrodenkappen von speziell hergestellten oder umgebauten Schweißzangen, erheblich reduziert werden.

Die vorgegebene Temperaturschwelle ist bevorzugterweise kleiner als 1.600°C, besonders bevorzugterweise kleiner als 1.530°C, sowie ganz besonders bevorzugterweise kleiner als 1.500°C.

Beim Erwärmen eines oder beider Bauelemente in Schritt a) werden das oder die Bauelemente an der Oberfläche, das heißt in dem Bereich, in dem das temperierte Werkzeug das erste Bauelement und/oder das zweite Bauelement erwärmt, auf eine Temperatur zwischen 200°C und 600°C erwärmt.

Bevorzugterweise wird die elektrische Spannung in Schritt c) solange angelegt, bis die Zwischenschicht aufgrund einer durch einen elektrischen Stromfluss verursachten Erwärmung in einem an die Fügestelle angrenzenden ersten Bereich thermisch zerstört ist.

Das im Bereich der Fügestelle zwischen den beiden Bauelementen verdrängte Material der Zwischenschicht wird somit in einem ersten Bereich, das heißt in einer um die Fügestelle herum und zwischen den beiden Bauelementen angeordneten Zone, derart thermisch zerstört, dass das Material der Zwischenschicht auch nach Abkühlen in diesem ersten Bereich nicht mehr fließfähig ist. Somit sind die Eigenschaften durch Erwärmung des Materials der Zwischenschicht derart verändert, dass das Material der Zwischenschicht in diesem Bereich keine fließfähigen Eigenschaften mehr aufweist. Dabei wird die elektrische Spannung in Schritt c) bevorzugterweise solange angelegt oder derart eingestellt, bis das verdrängte Material in dem ersten Bereich zumindest bereichsweise Hohlräume aufweist.

Die elektrische Spannung kann beispielsweise nach Ablauf einer vorgegebenen Zeitspanne an die beiden Bauelemente angelegt werden. Die Zeitspanne wird so definiert, dass mit ausreichender Sicherheit davon ausgegangen werden kann, dass durch die Erwärmung in Schritt a) und die Druckausübung in Schritt b) ein Kontakt zwischen den beiden Bauelementen im Bereich der Fügestelle hergestellt ist. Bevorzugterweise ist vorgesehen, dass in Schritt b) detektiert wird, wann der Kontakt zwischen dem ersten Bauelement und dem zweiten Bauelement im Bereich der Fügestelle hergestellt ist, um die elektrische Spannung in Schritt c) anzulegen. Somit ist der Zeitpunkt des Anlegens der elektrischen Spannung nicht oder zumindest nicht ausschließlich von einer vorgegebenen Zeitspanne abhängig. Besonders bevorzugterweise wird ein durch die Detektion des Kontaktes generiertes Signal zum Anlegen der elektrischen Spannung in Schritt c) beziehungsweise zum Einleiten des Schritts c) verwendet.

Die Detektion des Kontakts zwischen den beiden Bauelementen wird bevorzugterweise mittels einer Prüfspannung durchgeführt. Hierfür wird eine Prüfspannung an die beiden Bauelemente angelegt. Mittels Widerstands- und/oder Strommessung wird detektiert, wann ein Kontakt zwischen den beiden Bauelementen im Bereich der Fügestelle hergestellt ist. Die Prüfspannung kann über die in Schritt a) und/oder Schritt b) verwendeten Werkzeuge, beispielsweise Stempel, angelegt werden.

Ferner kann die Detektion des Kontakts zwischen den beiden Bauelementen mittels Wegmessung durchgeführt werden. Beispielsweise kann hierfür der Hub beziehungsweise Weg mindestens eines Werkzeuges zur Druckausübung in Schritt b) gemessen werden. Ein Kontakt kann dann hergestellt sein, wenn der Hub beziehungsweise zurückgelegte Weg eines Werkzeugs der Dicke der Zwischenschicht in diesem Bereich entspricht. Bei Verwendung von zwei Werkzeugen zur Druckausübung in Schritt b), wobei beide Werkzeuge in entgegengesetzter Richtung bewegt werden, kann ein Kontakt dann hergestellt sein, wenn der Hub oder der zurückgelegte Weg beider Werkzeuge in Summe der Dicke der Zwischenschicht entspricht.

Durch eine adaptive Regelung der Stromzufuhr kann die Prozesszeit für den Verfahrensschritt c) weiter minimiert werden. Dabei ist bevorzugterweise vorgesehen, den Stromfluss unmittelbar nach einer Detektion eines Kontakts zwischen den beiden Bauelementen einzuleiten.

Aufgrund der Erwärmung in Schritt a) wird in einem ersten Prozessschritt die Zwischenschicht zwischen den beiden Bauelementen bereichsweise plastifiziert und geschmolzen. Die Erwärmung der Zwischenschicht kann beispielsweise durch einen Wärmestrom von hierfür geeigneten Werkzeugen, beispielsweise Pressstempeln, Presswerkzeugen oder Schweißelektroden, durch die Bauelemente hindurch in die Zwischenschicht übertragen werden. Durch die Ausübung der Kraft in Schritt b) wird die Zwischenschicht in diesem Bereich verdrängt. Über die Temperatur sowie die Presskraft kann die Dauer für die Erwärmung der Zwischenschicht beeinflusst werden.

Nach Durchführung der Schritte a) bis c) ist eine elektrische Leitfähigkeit senkrecht durch den Schichtaufbau des ersten Bauteils dauerhaft gewährleistet, da das Material der Zwischenschicht im Bereich der Fügestelle dauerhaft verdrängt ist. Erfindungsgemäß werden die Verfahrensschritte a) bis c) deshalb als Verfahrensschritte zur Fügestellenvorbereitung bezeichnet. Schritt d) umfasst erfindungsgemäß den zeitlich nachgelagerten Fügeprozess zwischen dem ersten mehrschichtigen Bauteil und einem weiteren, nämlich dem zweiten Bauteil.

Die Fügestelle beziehungsweise der Bereich, in dem zwischen den beiden Bauelementen die Zwischenschicht verdrängt wird, kann abhängig von den temperierten Werkzeugen, beispielsweise Pressstempeln, eine beliebige Geometrie aufweisen. Ferner hängt die Geometrie im Wesentlichen davon ab, wie das zweite Bauteil, welches mit dem ersten mehrschichtigen Bauteil in Schritt d) verbunden werden soll, ausgebildet ist. Beispielsweise kann die Fügestelle in den Schritten a) bis c) kreisförmig oder bahnförmig ausgebildet werden. Für einen nachgelagerten Widerstandspunktschweißprozess oder einen Lichtbogen-Bolzen-Schweißprozess beträgt der Durchmesser der Fügestelle bevorzugterweise zwischen 2 mm und 20 mm. Für ein nachgelagertes Widerstandsbuckelschweißen von Funktionselementen, beispielsweise Verbindungsmitteln, wie Muttern oder Bolzen, kann der Durchmesser der Fügestelle bevorzugterweise bis zu 30 mm aufweisen.

Bevorzugterweise ist vorgesehen, dass die Schritte a) bis c) kontinuierlich entlang einer vorgegebenen Linie beziehungsweise Bahn des ersten Bauteils durchgeführt werden, um die Fügestelle bahnförmig auszubilden. Dabei kann die bahnförmige Fügestelle eine Breite zwischen 1 mm und 20 mm aufweisen. Die Länge der bahnförmigen Fügestelle kann zwischen 3 mm und der maximalen Länge des ersten Bauteils betragen. Die bahnförmige Fügestelle kann auch entlang mehrerer Seitenkanten, beispielsweise umfänglich geschlossen und somit entlang vier Seitenkanten, des ersten Bauteils angeordnet werden. Somit kann die bahnartige Fügestelle entlang eines Teils des ersten Bauteils oder auch entlang der gesamten Länge oder Breite des ersten Bauteils angeordnet werden. Vorzugsweise wird die bahnförmige Fügestelle im Randbereich des ersten Bauteils angeordnet. Um eine bahnförmige Fügestelle in den Schritten a) bis c) kontinuierlich entlang einer vorgegebenen Linie des ersten Bauteils anzuordnen, ist vorzugsweise ein rollenförmiges, sowie besonders bevorzugterweise zwei rollenförmige, Werkzeuge vorgesehen. Somit kann beispielsweise mittels Widerstandsrollnahtschweißen die bahnförmige Fügestelle angeordnet werden. Das oder die rollenförmigen Werkzeuge können ein oder mehrere Heizelemente aufweisen, um in Schritt a) den Wärmeeintrag auf ein oder beide Bauelemente durchzuführen. Ferner können das oder die rollenförmigen Werkzeuge zur Ausübung einer Druckkraft auf eines oder beide Bauelemente in Schritt b) ausgebildet sein. Auch ist bevorzugterweise vorgesehen, dass das oder die rollenförmigen Werkzeuge zur Anlegung einer elektrischen Spannung ausgebildet sind. Somit können mit einem oder beiden rollenförmigen Werkzeugen sämtliche Schritte a) bis c) für die Vorbereitung der Fügestelle durchgeführt werden. Das oder die rollenförmigen Werkzeuge werden dabei bevorzugterweise mit einer vorgegebenen Geschwindigkeit und/oder schrittweise beziehungsweise schubweise entlang der einer oder beider Oberflächen der Bauelemente bewegt.

Ferner ist bevorzugterweise vorgesehen, dass die Druckkraft in Schritt b) derart auf das erste Bauelement ausgeübt wird, dass auf einer Oberfläche des ersten Bauelementes im Bereich der Fügestelle eine Vertiefung entsteht. Ferner ist bevorzugterweise vorgesehen, dass die Drucckraft derart auf das zweite Bauelement ausgeübt wird, dass auf einer Oberfläche des zweiten Bauelementes im Bereich der Fügestelle eine im Wesentlichen ebene beziehungsweise plane Fläche bestehen bleibt. Somit ist bevorzugterweise vorgesehen, dass die Werkzeuge zur Ausübung der Druckkraft in Schritt b) derart ausgebildet sind, dass lediglich auf einer Seitenfläche des ersten Bauteils eine Vertiefung nach Verdrängung des Materials der Zwischenschicht in diesem Bereich entsteht. Die gegenüberliegende Oberfläche des ersten Bauteils bleibt somit bevorzugterweise plan beziehungsweise eben.

Die Werkzeuge, beispielsweise Stempel, zur Ausübung der Druckkraft in Schritt b) werden bevorzugterweise auch zum Erwärmen des ersten und/oder zweiten Bauelements verwendet. Hierfür werden die Werkzeuge mit einer Temperatur beaufschlagt. Besonders bevorzugterweise werden die Werkzeuge zum Erwärmen des ersten Bauelements und des zweiten Bauelements mit unterschiedlichen Temperaturen beaufschlagt. Beispielsweise kann ein Werkzeug mit einer im Wesentlichen plan ausgebildeten Andruckfläche mit einer niedrigeren Temperatur und ein Werkzeug mit einer gekrümmten, beispielsweise konvexen, Andruckfläche mit einer höheren Temperatur beaufschlagt werden.

Bevorzugterweise wird in Schritt d) das zweite Bauteil im Bereich der Fügestelle des ersten Bauteils durch Verschweißen, beispielsweise durch Widerstandspunktschweißen, Lichtbogen-Bolzen-Schweißen oder Widerstandsbuckelschweißen, verbunden. Dabei kann das zweite Bauteil flächig, das heißt blechförmig, ausgebildet sein. Ferner ist bevorzugterweise vorgesehen, dass das zweite Bauteil als Funktionselement, beispielsweise als Verbindungsmittel zum Verbinden mit einem weiteren Bauteil oder Element ausgebildet ist. Beispielsweise kann das Verbindungsmittel eine Mutter, Buckelmutter oder Bolzen sein. An ein derartiges Funktionselement beziehungsweise Verbindungsmittel kann ein weiteres Bauteil oder Element angebracht, beispielsweise angeschraubt oder angeklemmt werden. Um ein weiteres Bauteil oder Element an das Verbindungsmittel anzuschrauben, kann das Verbindungsmittel, beispielsweise die Mutter, ein Innengewinde oder auch ein Außengewinde aufweisen. Weitere Bauteile oder Elemente, welche an das Verbindungsmittel angebracht werden, können beispielsweise elektrische Leitungen, beispielsweise Masseleitungen, oder auch Verkleidungsteile, beispielsweise Innenverkleidungen, Armaturen oder Ähnliches, darstellen. Im Fahrzeugbau können somit beispielsweise Masseleitungen vermieden beziehungsweise reduziert werden. Durch das Verbinden eines Masseanschlusses, beispielsweise von einem Scheinwerfer eines Fahrzeuges, mit einem Verbindungsmittel, welches gemäß dem erfindungsgemäßen Verfahren mit dem ersten Bauteil verbunden ist und somit eine elektrische Verbindung zum ersten Bauteil aufweist, können zusätzliche Masseleitungen eingespart werden. Die Masseverbindung kann somit über das erste Bauteil beziehungsweise die Oberfläche des ersten Bauteils, hergestellt werden.

Ferner ist bevorzugterweise vorgesehen, dass vor dem Verbinden beziehungsweise Fügen des ersten Bauteils mit dem zweiten Bauteil in Schritt d) ein Loch durch das erste Bauteil im Bereich der Fügestelle gebohrt wird. Somit kann eine anschließende Schraubverbindung im Bereich der Fügestelle des ersten Bauteils mit einem weiteren Bauteil vorbereitet werden. Alternativerweise kann das Loch durch das erste Bauteil im Bereich der Fügestelle gestanzt werden. Der Loch- oder Stanzprozess kann in einem gesonderten Arbeitsgang stattfinden oder in das Werkzeug für die Schritte a), b) und/oder c) integriert werden.

In dem Loch durch das erste Bauteil im Bereich der Fügestelle kann ein zweites Bauteil, beispielsweise ein Verbindungselement, angeordnet und mit dem ersten Bauteil mechanisch verbunden werden. Beispielsweise kann ein Verbindungselement durch das Loch im ersten Bauteil hindurchgesteckt und verklemmt, verklebt oder auch verschweißt werden. Das im Loch angeordnete und mit dem ersten Bauteil verbundene Verbindungselement weist bevorzugterweise ein Innengewinde zur Aufnahme einer Schraubverbindung auf.

Das zweite Bauteil kann, wie das erste Bauteil, großflächig, beispielsweise blechförmig, ausgebildet sein. Ferner kann das zweite Bauteil ebenfalls mehrschichtig, insbesondere als Verbundblech, ausgebildet sein. Das erste und/oder zweite Bauteil kann ferner als Mehrblech ausgebildet sein. Beispielsweise kann hierfür ein Mehrblech bestehend aus zwei oder mehr Verbundblechen vorgesehen sein.

Zwischen dem ersten Bauteil und dem zweiten Bauteil ist bevorzugterweise zumindest bereichsweise eine Klebeschicht angeordnet.

Bevorzugterweise ist das zweite Bauteil als Funktionselement, zum Beispiel als Verbindungsmittel, wie zum Beispiel als Mutter, Buckelmutter oder Bolzen, ausgebildet. Dabei kann das Funktionselement beziehungsweise das Verbindungselement auf das erste Bauteil im Bereich der Fügestelle aufgesetzt und mit dem ersten Bauteil verbunden sein. Alternativerweise kann das zweite Bauteil im Bereich der Fügestelle durch ein im ersten Bauteil angeordnete Loch eingesetzt und mit dem ersten Bauteil verbunden sein. Das Verbindungsmittel, beispielsweise die Mutter, Buckelmutter oder der Bolzen, kann dabei mittels eines mechanischen oder auch thermischen Verfahrens mit dem ersten Bauteil verbunden sein. Beispielsweise kann das Verbindungsmittel mittels Lichtbogen-Bolzen-Schweißen, Widerstandsbuckelschweißen oder ähnlicher Schweißverfahren mit dem ersten Bauteil verbunden sein. Des Weiteren könnte das Verbindungselement mit dem ersten Bauteil durch eine Klemmverbindung, insbesondere bei Anordnung des Verbindungsmittels in einem Loch, im Bereich der Fügestelle mit dem ersten Bauteil verbunden sein.

Auch ist bevorzugterweise vorgesehen, dass eine maximale Breite des Verbindungselements kleiner als die maximale Breite oder der Durchmesser der Fügestelle ist. Besonders bevorzugterweise ist die maximale Breite des Verbindungselements kleiner als die Hälfte der maximalen Breite oder die Hälfte des Durchmessers der Fügestelle. Die maximale Breite des Verbindungselements kann beispielsweise ein Außendurchmesser des Verbindungselements sein.

Ferner ist eine Vorrichtung zur Fügestellenvorbereitung einer Fügestelle an einem ersten Bauteil zum Fügen des ersten Bauteils mit einem zweiten Bauteil an der Fügestelle des ersten Bauteils vorgesehen. Die Vorrichtung ist zur Fügestellenvorbereitung zur Durchführung eines Verfahrens gemäß der Ansprüche 1 bis 8 ausgebildet.

Die Vorrichtung zur Fügestellenvorbereitung weist bevorzugterweise ein erstes Andruckmittel zur Ausübung einer Druckkraft auf das erste Bauelement des ersten Bauteils sowie ein zweites Andruckmittel zur Ausübung einer Druckkraft auf das zweite Bauelement des ersten Bauteils auf. Dabei ist bevorzugterweise vorgesehen, dass eines der beiden Andruckmittel eine im Wesentlichen plan ausgebildete Andruckfläche aufweist. Das andere Andruckmittel kann jede geeignete Andruckfläche aufweisen. Beispielsweise kann das andere Andruckmittel eine konvex ausgebildete Andruckfläche aufweisen. Durch die konvex ausgebildete Andruckfläche eines Andruckmittels wird auf einer Oberfläche des ersten Bauteils bei Ausübung einer Druckkraft in Schritt b) eine Vertiefung in dieser Oberfläche erzeugt. Dadurch, dass das andere Andruckmittel eine im Wesentlichen plan ausgebildete Andruckfläche aufweist, ist nach Ausübung der Drucckraft in Schritt b) die gegenüberliegende Außenfläche des ersten Bauteils weiterhin plan beziehungsweise eben ausgebildet.

Die Andruckfläche eines oder beider Andruckmittel kann ferner bevorzugterweise bandförmig ausgebildet sein. Das Andruckmittel kann als Stempel, beispielsweise als Pressstempel, oder als Elektrodenkappe einer Schweißvorrichtung ausgebildet sein. Ferner kann das Andruckmittel rollenförmig zur Ausbildung einer bahnförmigen Fügestelle ausgebildet sein. Ein oder beide Andruckmittel können Heizelemente zur Erzeugung der Wärme für Schritt a) aufweisen. Des Weiteren kann eines oder beide Andruckmittel ein Detektionsmittel aufweisen, um einen Kontakt zwischen den beiden Bauteilen während der Ausübung der Druckkraft in Schritt b) zu detektieren. Besonders bevorzugterweise ist zumindest ein Heizelement in einem Andruckmittel derart ausgebildet, dass es eine hohe Wärmeleitfähigkeit an einem ersten Ende sowie eine schlechte Wärmeleitfähigkeit an einem zweiten Ende aufweist. Somit kann die Wärmeeinleitung im Bereich des ersten Endes in eines der beiden Bauelemente besonders günstig durchgeführt werden. Im Bereich des zweiten Endes wird dagegen die Wärme nicht, beziehungsweise in nur sehr geringem Maße, in die Vorrichtung geleitet.

### Kurze Beschreibung der Zeichnungen

Es zeigen:
- Figur 1a: die Verfahrensschritte a) bis c) zur Vorbereitung einer Fügestelle an einem ersten mehrschichtigen Bauteil,
- Figur 1b: die verschiedenen Zonen im Bereich der Fügestelle,
- Figur 2a: den Verfahrensschritt d) zum Verbinden des ersten Bauteils an der vorbereiteten Fügestelle mit einem zweiten blechartigen Bauteil,
- Figur 2b: den Verfahrensschritt d) zum Verbinden eines ersten Bauteils im Bereich der vorbereiteten Fügestelle mit einem zweiten, als Bolzen ausgebildeten, Bauteil,
- Figur 2c: den Verfahrensschritt d) zum Verbinden des ersten Bauteils im Bereich der vorbereiteten Fügestelle mit einem zweiten, als Mutter ausgebildeten, Bauteil,
- Figur 2d: den Verfahrensschritt d) zum Verbinden des ersten Bauteils im Bereich der vorbereiteten Fügestelle mit einem zweiten ringförmigen und im Loch durch das erste Bauteil angeordneten, Bauteil,
- Figur 3a - 3c: unterschiedliche Ausgestaltungen von Andruckmitteln für die Durchführung der Verfahrensschritte a) bis c), und
- Figur 4: eine Vorrichtung zur Fügestellenvorbereitung.

### Bevorzugte Ausführungsformen der Erfindung

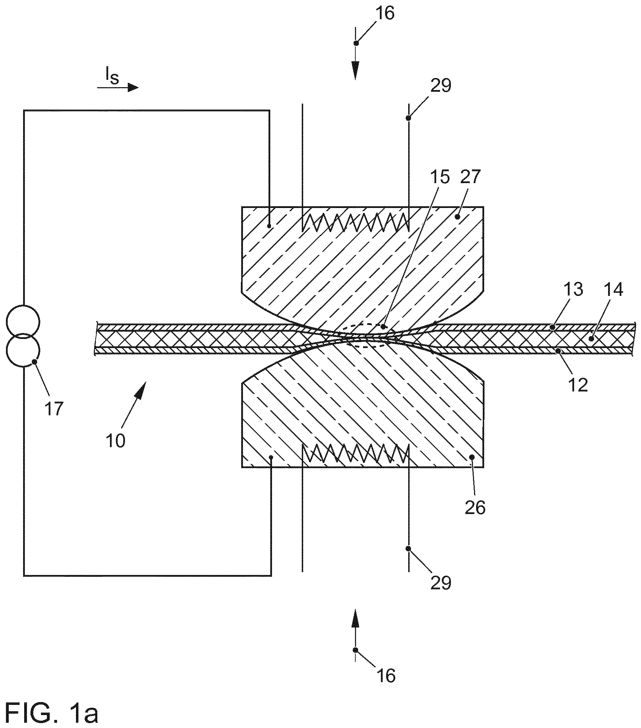

Figur 1a zeigt die Verfahrensschritte a) bis c) zur Vorbereitung einer Fügestelle 15 an einem ersten Bauteil 10. Das erste Bauteil 10 ist mehrschichtig ausgebildet und weist zwei blechartige Bauelemente 12, 13 sowie eine zwischen den beiden Bauelementen 12, 13 angeordnete Zwischenschicht 14 auf. Die Zwischenschicht ist als kunststoffaufweisende Schicht ausgebildet. Um das erste Bauteil 10 mit einem zweiten Bauteil 11 (in Figur 1a nicht gezeigt) zu verbinden, muss das Fügeverfahren derart vorgesehen sein, dass vor dem Verbinden des ersten Bauteils 10 mit einem zweiten Bauteil 11 eine Fügestelle 15 vorbereitet wird. Wesentlich ist hierbei, dass die Zwischenschicht 14 im Bereich der Fügestelle 15 verdrängt wird, sodass ein Kontakt zwischen den beiden Bauelementen 12, 13 in diesem Bereich entsteht.

Die Andruckmittel 26, 27 zur Ausübung der Druckkraft in Schritt b) können beispielsweise Elektrodenkappen einer Schweißvorrichtung sein. Ferner können für die einzelnen Verfahrensschritte a) bis c) unterschiedliche Werkzeuge verwendet werden. Wie in Figur 1a gezeigt, werden in diesem Beispiel für die Verfahrensschritte a) bis c) dieselben Werkzeuge, nämlich die Andruckmittel 26, 27 verwendet. Hierfür weisen die beiden Andruckmittel 26, 27 Heizelemente 29 sowie Anschlüsse zum Anschluss einer elektrischen Spannung 17 auf.

In einem ersten Verfahrensschritt werden die beiden vorab erwärmten Andruckmittel 26, 27 auf die jeweilige Oberfläche eines Bauelementes 12, 13 aufgesetzt. Über die Heizelemente 29 sind die Andruckmittel 26, 27 auf eine Temperatur zwischen 200°C und 500°C erwärmt beziehungsweise erhitzt.

In einem zweiten Schritt wird eine Druckkraft 16 mit den beiden Andruckmitteln 26, 27 auf die Bauelemente 12, 13 ausgeübt, solange, bis die Zwischenschicht 14 im Bereich der vorzubereitenden Fügestelle 15 zwischen dem ersten Bauelement 12 und dem zweiten Bauelement 13 verdrängt wurde und ein Kontakt zwischen den beiden Bauelementen 12, 13 hergestellt ist.

Sowie ein Kontakt zwischen den beiden Bauelementen 12, 13 in diesem Bereich hergestellt ist, wird an die beiden Andruckmittel 26, 27 eine elektrische Spannung 17 angelegt. Somit wird ein elektrischer Strom senkrecht durch die beiden Bauelemente 12, 13 geleitet. Abhängig von der Höhe der Stromstärke wird der Kontaktbereich zwischen den beiden Bauelementen 12, 13 infolge der Widerstandserwärmung erhitzt. Dabei wird die elektrische Spannung 17 derart gesteuert, dass die Temperatur in dem Kontaktbereich zwischen den beiden Bauelementen 12, 13 eine vorgegebene Temperaturschwelle 21 nicht überschreitet. Die beiden Bauelemente 12, 13 sind als Metallbleche ausgebildet und weisen eine Schmelztemperatur von ca. 1.530°C auf. Damit die beiden Bauelemente 12, 13 in diesem Bereich nicht verschweißt, sondern lediglich aneinandergeheftet werden, liegt die Temperaturschwelle 21 unter der Schmelztemperatur von ca. 1.530°C der beiden Bauelemente 12, 13. Es entsteht somit im Bereich der Kontaktstelle durch die Widerstandserwärmung keine Schweißlinse.

Aufgrund der Widerstandserwärmung kommt es zu einem Wärmestrom in der Zwischenschicht 14. Das Material der verdrängten Zwischenschicht 14 wird aufgrund dieses Wärmestroms in einem ersten Bereich 18 der verdrängten Zwischenschicht 14, nämlich in dem direkt an die Fügestelle 15 angrenzenden Bereich, derart thermisch zerstört, dass das Material in diesem Bereich seine Fließfähigkeit verliert. Auch nach dem Öffnen des Presswerkzeuges beziehungsweise dem Lösen der Druckkraft 16 kommt es deshalb zu keinem unerwünschten Rückfließen der Zwischenschicht 14 in dem Bereich der Fügestelle 15.

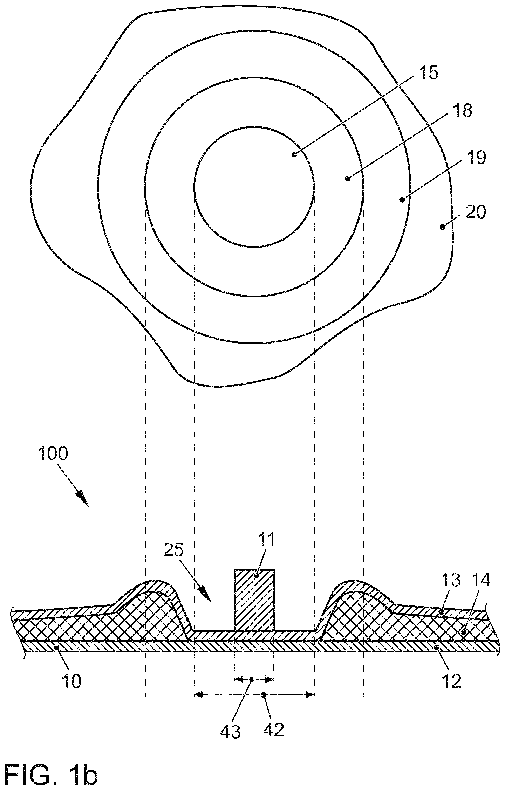

Figur 1b zeigt den Bereich der Fügestelle 15. Dabei sind in Figur 1b oben die verschiedenen Bereiche 18, 19, 20 der verdrängten Zwischenschicht 14 um die Fügestelle 15 herum gezeigt. Im Bereich der Fügestelle 15 ist das Material der Zwischenschicht 14 vollständig verdrängt. Aufgrund der Widerstandserwärmung und des hierdurch verursachten Wärmestroms durch das Material der verdrängten Zwischenschicht 14 ist dieses Material in einem ersten Bereich 18 derart thermisch zerstört, dass es seine Fließfähigkeit verloren hat. An den ersten Bereich 18 schließt der zweite Bereich 19 der verdrängten Zwischenschicht 14 an. In diesem Bereich ist das Material der Zwischenschicht 14 lediglich thermisch beeinflusst. Im übrigen Bereich, dem dritten Bereich 20 der verdrängten Zwischenschicht 14 sowie im Bereich der nicht verdrängten Zwischenschicht 14 ist das Material der Zwischenschicht 14 nicht beschädigt oder beeinflusst.

Bei dem in Figur 1b gezeigten Beispiel wurden zur Fügestellenvorbereitung derartige Druckmittel 26, 27 verwendet, dass lediglich eine Vertiefung 25 im zweiten Bauelement 13 angeordnet ist. In diesem Bereich kann beispielsweise das zweite Bauteil 11 angeordnet und mit dem ersten Bauteil 10 verbunden, beispielsweise verschweißt, werden. In Figur 1b ist ein mit dem ersten Bauteil 10 verbundener Bolzen 23 als zweites Bauteil 11 gezeigt. Der Bolzen 23 ist somit in der Vertiefung 25 angeordnet. Auf der gegenüberliegenden Außenfläche des ersten Bauteils 10, nämlich im Bereich der Oberfläche des zweiten Bauelementes 13, wurde durch ein hierfür geeignetes Andruckmittel 26 (nicht in Figur 1b gezeigt) eine plane Außenfläche des ersten Bauteils 10 beibehalten.

Die maximale Breite 42 der Fügestelle 15 ist größer als die maximale Breite 43 des zweiten Bauteils 11, nämlich des Bolzens 23.

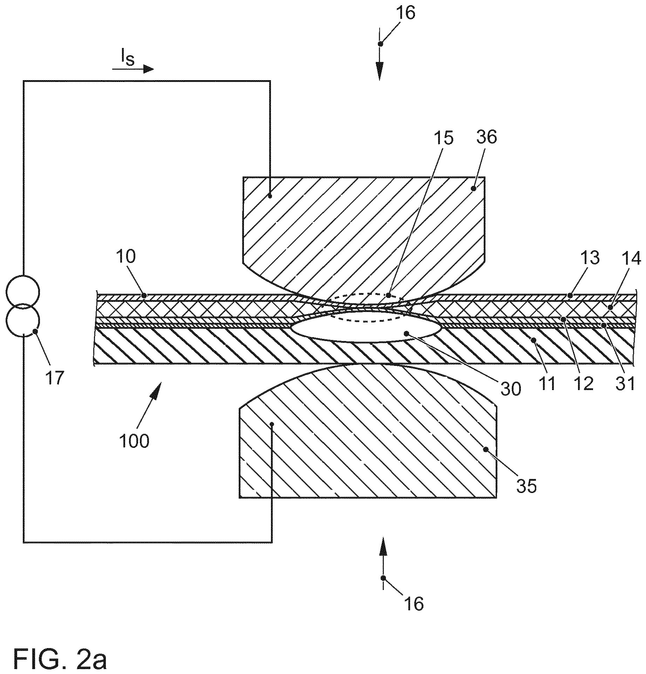

In den Figuren 2a bis 2d ist der Verfahrensschritt d) zum Verbinden des ersten Bauteils 10 mit einem zweiten Bauteil 11 im Bereich der vorbereiteten Fügestelle 15 gezeigt. In Figur 2a ist gezeigt, wie ein flächig ausgebildetes zweites Bauteil 11 in Form eines Bleches im Bereich der Fügestelle 15 mit dem ersten Bauteil 10 verschweißt wird. Dabei entsteht im Bereich der Kontaktstelle zwischen dem ersten Bauteil 10 und dem zweiten Bauteil 11 eine Schweißlinse 30. Zwischen den beiden flächig ausgebildeten Bauteilen 10, 11 ist eine Klebeschicht 31 angeordnet. Die Klebeschicht 31 kann beispielsweise raupenförmig oder bandförmig auf eine oder beide Oberflächen des oder der Bauteile 10, 11 aufgetragen werden.

Mit dem Lichtbogen-Bolzen-Schweißen können stiftförmige Teile, beispielsweise Bolzen 23, mit dem flächig ausgebildeten ersten Bauteil 10 an der vorbereiteten Fügestelle 15 gefügt beziehungsweise verbunden werden. Die Art der Lichtbogenzündung kann durch eine Spitzenzündung oder eine Hubzündung erfolgen. Als Energiequelle kann ein Schweißgleichrichter oder Umformer, Schweißtransformator oder Kondensator eingesetzt werden. Die Schweißstromstärke liegt im Bereich von 100 A bis 10.000 A. Die Schweißzeit kann von 10 ms bis 2.000 ms betragen. Der Werkstoff des stiftförmigen zweiten Bauteils 11, beispielsweise des Bolzens 23, kann Stahl oder Chrom-Nickel-Stahl aufweisen. Dabei kann das zweite Bauteil 11 metallisch blank, verzinkt oder ähnliche korrosionshemmende Beschichtungen aufweisen. Ferner kann je nach Anwendungsfall das zweite Bauteil 11 eine Beölung, beziehungsweise aufgetragene Ölschicht, aufweisen. Ein stiftförmig ausgebildetes zweites Bauteil 11, beispielsweise ein Bolzen 23, besitzt üblicherweise einen Durchmesser zwischen 1 mm und 14 mm. Üblicherweise weist dieser Durchmesser einen Bereich zwischen 3 mm und 8 mm auf. Die Länge eines stiftförmig ausgebildeten zweiten Bauteils 11, beispielsweise eines Bolzens 23, kann zwischen 1 mm und 100 mm betragen. Das stiftförmig ausgebildete zweite Bauteil 11, beispielsweise der Bolzen 23, kann dabei bereichsweise oder über die gesamte Länge ein Außengewinde und/oder ein Innengewinde aufweisen.

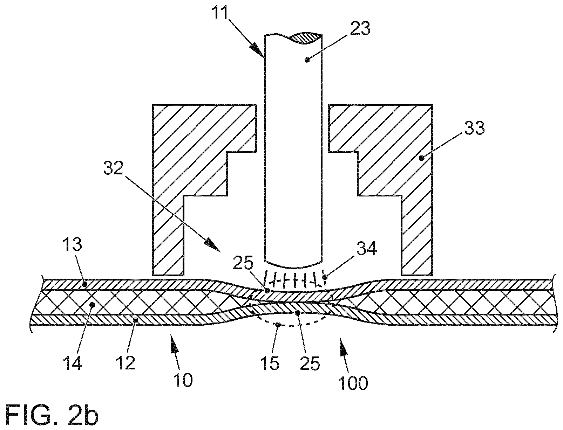

In Figuren 2b bis 2d ist das zweite Bauteil 11 als Funktionselement, insbesondere als Verbindungselement, ausgebildet. In Figur 2b ist das zweite Bauteil 11, nämlich das Verbindungsmittel, als Bolzen 23 ausgebildet. Der Bolzen 23 wird im Bereich der vorbereiteten Fügestelle 15 mittels Lichtbogenschweißen auf die Oberfläche des ersten Bauteils 10 aufgeschweißt. Hierbei kann der Schweißvorgang unter Schutzgasatmosphäre 32 durch Vorsehen eines Keramikringes 33 um den Bolzen 23 herum durchgeführt werden.

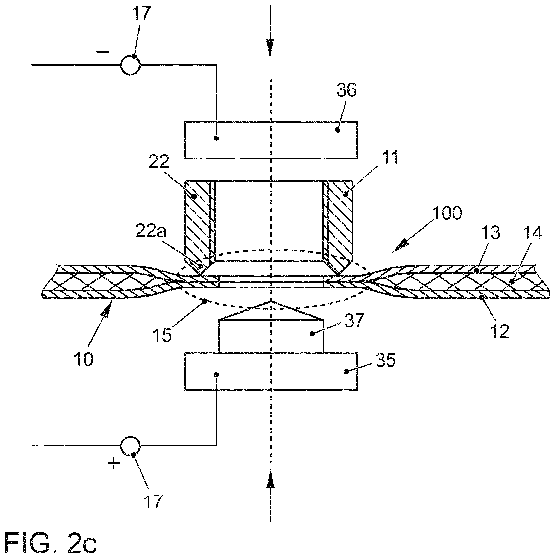

Figur 2c zeigt ein zweites Bauteil 11, wobei das zweite Bauteil 11 als Mutter 22, nämlich als Buckelmutter, ausgebildet ist. Dabei wird die Mutter 22 mit einem stirnseitig angeordneten umlaufenden Buckel 22a auf die Oberfläche des ersten Bauteils 10 im Bereich der Fügestelle 15 aufgesetzt. Der Buckel 22a kann als Ring- oder Segmentbuckel ausgebildet sein. Mittels einer geeigneten Schweißvorrichtung wird die Mutter 22 auf die Oberfläche des ersten Bauteils 10 im Bereich der Fügestelle 15 aufgeschweißt. Hierfür kann eine Schweißelektrode 35 beispielsweise einen Zentrierstift 37 aufweisen. Zur Aufnahme des Zentrierstiftes 37 kann im Bereich der Fügestelle 15 eine Aussparung vorgesehen sein.

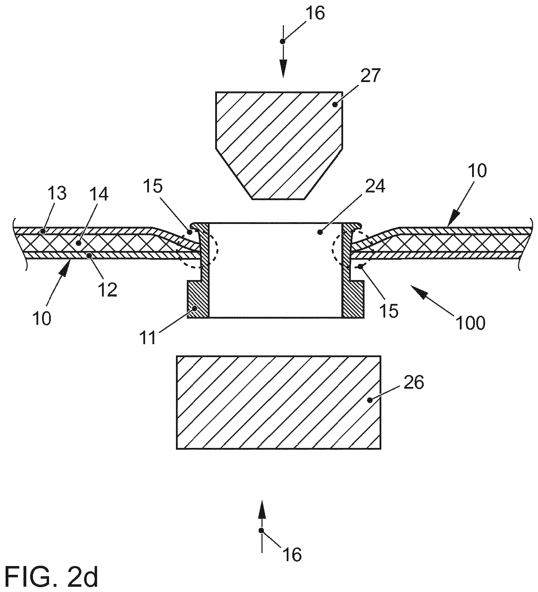

In Figur 2d ist das zweite Bauteil 11 als ringförmiges Verbindungselement, beispielsweise ringförmige Mutter 22, ausgebildet. Im Gegensatz zu den Anordnungen in Figuren 2a bis 2c wird in Figur 2d das zweite Bauteil 11 nicht mittels eines thermischen Fügeverfahrens, sondern mittels eines mechanischen Fügeverfahrens mit dem ersten Bauteil 10 verbunden. Dabei wird vor dem Verbinden des ersten Bauteils 10 mit dem zweiten Bauteil 11 im Bereich der Fügestelle 15 ein Loch 24 durch das erste Bauteil 10 angeordnet. Das Loch 24 kann durch Bohren oder Stanzen angeordnet werden. Das zweite Bauteil 11 wird in das Loch 24 im Bereich der Fügestelle 15 eingefügt und mittels geeigneter Andruckmittel 26, 27 mit dem ersten Bauteil 10 verklemmt.

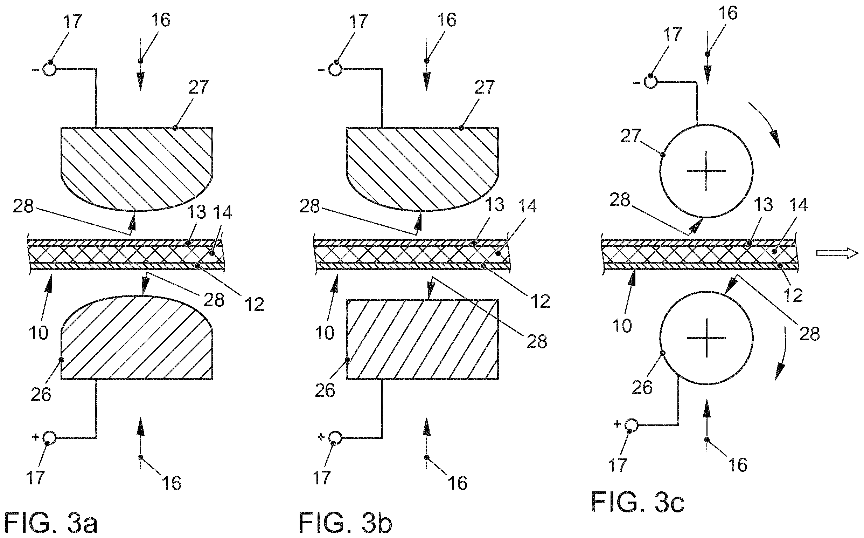

In Figuren 3a bis 3c sind unterschiedliche Formen von Andruckmitteln 26, 27 für die Durchführung der Verfahrensschritte a) bis c) gezeigt. Die Andruckmittel 26, 27 können insbesondere unterschiedliche Andruckflächen 28 aufweisen. In Figur 3a weisen beide Andruckmittel 26, 27 konvex ausgebildete Andruckflächen 28 auf. Hierdurch werden beim Vorbereiten der Fügestelle 15 beide Oberflächen des ersten Bauteils 10 eingedrückt, sodass Vertiefungen 25 entstehen.

In Figur 3b weist ein Andruckmittel 26 eine plane beziehungsweise ebene Andruckfläche 28 auf. Hierdurch wird erreicht, dass eine Oberfläche des ersten Bauteils 10 nach Vorbereiten der Fügestelle 15 weiterhin eine plane beziehungsweise ebene Oberfläche beibehält. Alternativerweise könnten auch beide Andruckmittel 26, 27 plane Andruckflächen 28 aufweisen. Hierdurch könnte eine Fügestelle, wie in Figur 2c gezeigt, erzeugt werden.

In Figur 3c sind rollenförmige Andruckmittel 26, 27 gezeigt. Mittels derartiger rollenförmiger Andruckmittel 26, 27 kann eine bahnartige Fügestelle 15 am ersten Bauteil 10 angeordnet, beziehungsweise vorbereitet, werden.

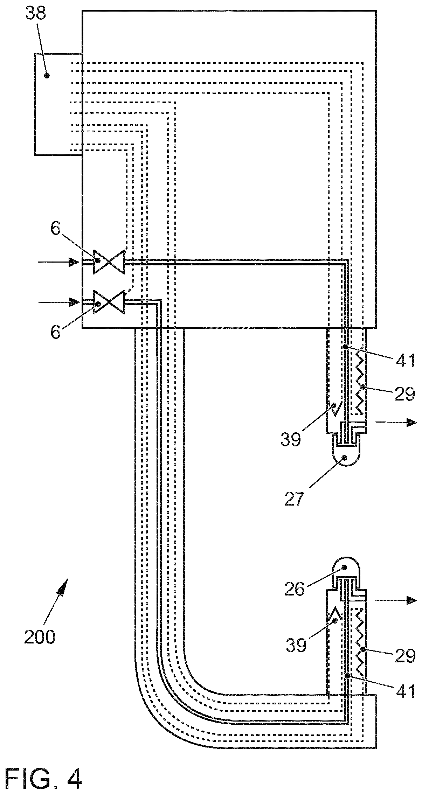

Figur 4 zeigt eine Vorrichtung 200 zur Fügestellenvorbereitung. Die Verfahrensschritte a) bis c) zur Vorbereitung der Fügestelle 15 können mit einer Vorrichtung 200 oder mehreren beziehungsweise unterschiedlichen Vorrichtungen durchgeführt werden. Hierfür weist die Vorrichtung 200 für die Erwärmung und Verdrängung der Zwischenschicht 14 Presswerkzeuge, beispielsweise Andruckmittel 26, 27 auf. Beispielsweise kann hierfür eine Schweißanlage mit Heizelementen 29 in den Elektroden 35, 36 ausgestattet werden. Durch ferner vorgesehene Thermoelemente 39 kann die gewünschte Temperatur an den Andruckmitteln 26, 27 geregelt werden. Die temperierten Andruckmittel 26, 27 sind bei sämtlichen Bauformen von üblichen Wider-standsschweißanlagen, beispielsweise C-Zangen, X-Zangen, Maschinenzangen, Stationär- und Portalanlagen, möglich. Auf eine Wasserkühlung der Elektroden kann dabei verzichtet werden. Dadurch, dass insbesondere für den Schritt c) beim Anlegen der elektrischen Spannung 17 zum Anheften der beiden Bauelemente 12, 13 aneinander kurze Prozesszeiten vorgesehen sind, kann die Standzeit der als Elektrodenkappen ausgebildeten Andruckmittel 26, 27 erhöht werden. Ferner kann die Vorrichtung 200 zur Wärmeabfuhr Kühlbohrungen 41 aufweisen. Mittels eines Reglers 38 können Temperatursignale verarbeitet werden. Unabhängig von Schweißparametern, Umgebungseinflüssen, Taktzeiten und Betriebszuständen, kann durch Steuerung von Druckluftventilen 40 und Heizelementen 29 die gewünschte Temperatur eingestellt werden.

Bei der Konstruktion der Vorrichtung 200, beispielsweise einer Widerstandspunktschweißzange, kann das Temperaturprofil zwischen den Andruckmitteln 26, 27 und dem Grundkörper, beispielsweise dem Zangengrundkörper, durch die gezielte Verwendung von Kupferlegierungen und Chrom-Nickel-Stählen beeinflusst werden. Der Wärmefluss von einem Heizelement 29 zum Andruckmittel 26, 27, beispielsweise Elektrodenkappe, wird durch Bauteile aus Kupferlegierungen (z. B. CuCr1Zr oder CuNiSiCr) begünstigt. Der Wärmefluss vom Heizelement 29 in den Grundkörper der Vorrichtung 200 und in andere temperaturempfindliche Bauteile der Vorrichtung 200 kann durch Bauteile (z. B. die Elektrodenarme einer Widerstandspunktschweißzange) aus einem relativ schlecht wärmeleitenden Chrom-Nickel-Stahl vermindert werden. Ferner ist die Verwendung von keramischen Isolierplatten in diesem Bereich denkbar, um möglichst wenig Wärme von den Andruckmitteln 26, 27 zum Grundkörper der Vorrichtung 200 zu leiten. Beispielsweise kann eine Isolierplatte zwischen dem Andruckmittel 26, 27 und dem Grundkörper der Vorrichtung 200 angeordnet sein.

Die Vorrichtung 200 kann auch für den Verfahrensschritt d) zum Verbinden des ersten Bauteils mit einem zweiten Bauteil im Bereich der in den Schritten a) bis c) vorbereiteten Fügestelle 15 verwendet werden.

### Bezugszeichenliste

- 100: Bauelementverbund
- 200: Vorrichtung zur Fügestellenvorbereitung
- 10: erstes Bauteil
- 11: zweites Bauteil
- 12: erstes Bauelement des ersten Bauteils
- 13: zweites Bauelement des ersten Bauteils
- 14: Zwischenschicht
- 15: Fügestelle
- 16: Druckkraft
- 17: elektrische Spannung
- 18: erster Bereich der verdrängten Zwischenschicht
- 19: zweier Bereich der verdrängten Zwischenschicht
- 20: dritter Bereich der verdrängten Zwischenschicht
- 21: Temperaturschwelle
- 22: Mutter
- 22a: Buckel
- 23: Bolzen
- 24: Loch
- 25: Vertiefung
- 26: erstes Andruckmittel
- 27: zweites Andruckmittel
- 28: Andruckfläche
- 29: Heizelement
- 30: Schweißlinse
- 31: Klebeschicht
- 32: Schutzgas
- 33: Keramikring
- 34: Lichtbogen
- 35: erste Schweißelektrode
- 36: zweite Schweißelektrode
- 37: Zentrierstift
- 38: Regler
- 39: Thermoelement
- 40: Druckluftventil
- 41: Kühlbohrung
- 42: maximale Breite des Fügebereichs
- 43: maximale Breite des zweiten Bauteils

## Patentansprüche

1. Verfahren zum Fügen eines ersten Bauteils (10) mit einem zweiten Bauteil (11) an einer Fügestelle (15) des ersten Bauteils (10), wobei das erste Bauteil (10) zumindest ein flächig ausgebildetes erstes Bauelement (12), ein flächig ausgebildetes zweites Bauelement (13) und eine zumindest bereichsweise zwischen den beiden Bauelementen (12, 13) angeordnete kunststoffaufweisende Zwischenschicht (14) aufweist, wobei das Verfahren folgende Schritte aufweist:
a) Erwärmen des ersten Bauelements (12) und/oder des zweiten Bauelements (13) im Bereich der Fügestelle (15); und
b) Ausüben einer Druckkraft (16) auf das erste Bauelement (12) und/oder das zweite Bauelement (13) im Bereich der Fügestelle (15), solange, bis die Zwischenschicht (14) im Bereich der Fügestelle (15) zwischen dem ersten Bauelement (12) und dem zweiten Bauelement (13) verdrängt wurde und ein Kontakt zwischen dem ersten Bauelement (12) und dem zweiten Bauelement (13) im Bereich der Fügestelle (15) hergestellt ist; und
c) Anlegen einer elektrischen Spannung (17) an das erste Bauelement (12) und das zweite Bauelement (13) im Bereich der Fügestelle (15), solange, bis das erste Bauelement (12) und das zweite Bauelement im Bereich der Fügestelle (15) aneinander haften; und
d) Verbinden des ersten Bauteils (10) mit dem zweiten Bauteil (11) im Bereich der Fügestelle (15);
**dadurch gekennzeichnet,**
**dass** während Schritt c) eine Temperatur im Kontaktbereich zwischen dem ersten Bauelement (12) und dem zweiten Bauelement (13) nicht über eine vorgegebene Temperaturschwelle (21) ansteigt, wobei die Temperaturschwelle (21) kleiner als der Schmelzpunkt eines Materials des ersten Bauelements (12) und kleiner als der Schmelzpunkt eines Materials des zweiten Bauelements (13) ist, wobei die Verfahrensschritte a) bis c) als Verfahrensschritte zur Fügestellenvorbereitung bezeichnet werden, wobei Schritt d) einen zeitlich nachgelagerten Fügeprozess zwischen dem ersten mehrschichtigen Bauteil (10) und einem weiteren, nämlich dem zweiten Bauteil (11) umfasst.

2. Verfahren gemäß Anspruch 1,
**dadurch gekennzeichnet,**
**dass** die vorgegebene Temperaturschwelle (21) kleiner als 1600 °C, bevorzugterweise kleiner als 1530°C, besonders bevorzugterweise kleiner als 1500 °C ist

3. Verfahren gemäß Anspruch 1 oder 2,
**dadurch gekennzeichnet,**
**dass** die elektrische Spannung (17) in Schritt c) solange angelegt wird, bis die Zwischenschicht (14) aufgrund einer durch einen elektrischen Stromfluss verursachten Erwärmung in einem an die Fügestelle (15) angrenzenden ersten Bereich (18) thermisch zerstört ist, derart, dass die Zwischenschicht (14) auch nach Abkühlen in diesem ersten Bereich (18) nicht mehr fließfähig ist

4. Verfahren gemäß einem der vorhergehenden Ansprüche,
**dadurch gekennzeichnet,**
**dass** in Schritt b) detektiert wird, wann der Kontakt zwischen dem ersten Bauelement (12) und dem zweiten Bauelement (13) im Bereich der Fügestelle (15) hergestellt ist, um die elektrische Spannung (17) in Schritt c) anzulegen.

5. Verfahren gemäß Anspruch 4,
**dadurch gekennzeichnet,**
**dass** die Detektion des Kontakts zwischen dem ersten Bauelement (12) und dem zweiten Bauelement (13) mittels einer an den beiden Bauelementen (12, 13) angelegten Prüfspannung und/oder mittels Wegmessung durchgeführt wird.

6. Verfahren gemäß einem der vorhergehenden Ansprüche,
**dadurch gekennzeichnet,**
**dass** die Schritte a) bis c) kontinuierlich entlang einer vorgegebenen Linie des ersten Bauteils (10) durchgeführt werden um die Fügestelle (15) bahnförmig auszubilden.

7. Verfahren gemäß einem der vorhergehenden Ansprüche,
**dadurch gekennzeichnet,**
**dass** in Schritt b) die Druckkraft (16) derart auf das erste Bauelement (12) ausgeübt wird, dass auf einer Oberfläche des ersten Bauelements (12) im Bereich der Fügestelle (15) eine Vertiefung (25) entsteht, und die Druckkraft (16) derart auf das zweite Bauelement (13) ausgeübt wird, dass auf einer Oberfläche des zweiten Bauelements (13) im Bereich der Fügestelle (15) eine ebene Fläche bestehen bleibt.

8. Verfahren gemäß einem der vorhergehenden Ansprüche,
**dadurch gekennzeichnet,**
**dass** in Schritt d) das zweite Bauteil (11) im Bereich der Fügestelle (15) des ersten Bauteils (10) durch Verschweißen mit dem ersten Bauteil (10) verbunden wird.

## Claims

1. Method for joining a first component (10) to a second component (11) at a joint (15) of the first component (10), the first component (10) having at least a flat first component (12), a flat second component (13) and a plastics-material-containing intermediate layer (14) arranged at least in regions between the two components (12, 13), the method comprising the following steps:
a) heating the first component (12) and/or the second component (13) in the region of the joint (15); and
b) exerting a compressive force (16) on the first component (12) and/or the second component (13) in the region of the joint (15) until the intermediate layer (14) has been displaced in the region of the joint (15) between the first component (12) and the second component (13) and contact is established between the first component (12) and the second component (13) in the region of the joint (15); and
c) applying an electrical voltage (17) to the first component (12) and the second component (13) in the region of the joint (15) until the first component (12) and the second component adhere to one another in the region of the joint (15); and
d) connecting the first component (10) to the second component (11) in the region of the joint (15);
**characterized in that**
during step c) a temperature in the contact region between the first component (12) and the second component (13) does not rise above a predetermined temperature threshold (21), the temperature threshold (21) being less than the melting point of a material of the first component (12) and less than the melting point of a material of the second component (13), method steps a) to c) being referred to as method steps for joint preparation, step d) comprising a subsequent joining process between the first multilayer component (10) and a further component, namely the second component (11).

2. Method according to claim 1,
**characterized in that**
the predetermined temperature threshold (21) is less than 1600°C, preferably less than 1530°C, particularly preferably less than 1500°C.

3. Method according to either claim 1 or claim 2,
**characterized in that**
in step c) the electrical voltage (17) is applied until the intermediate layer (14) is thermally destroyed due to heating in a first region (18) adjacent to the joint (15) caused by an electrical current flow, such that the intermediate layer (14) is no longer flowable even after cooling in this first region (18).

4. Method according to any of the preceding claims,
**characterized in that**
in step b) it is detected when the contact between the first component (12) and the second component (13) in the region of the joint (15) is established in order to apply the electrical voltage (17) in step c).

5. Method according to claim 4,
**characterized in that**
the detection of the contact between the first component (12) and the second component (13) is carried out by means of a test voltage applied to the two components (12, 13) and/or by means of distance measurement.

6. Method according to any of the preceding claims,
**characterized in that**
steps a) to c) are carried out continuously along a predetermined line of the first component (10) in order to form the joint (15) in a web shape.

7. Method according to any of the preceding claims,
**characterized in that**
in step b) the compressive force (16) is exerted on the first component (12) such that on a surface of the first component (12) in the region of the joint (15) a recess (25) is created, and the compressive force (16) is exerted on the second component (13) such that a flat face remains on a surface of the second component (13) in the region of the joint (15).

8. Method according to any of the preceding claims,
**characterized in that**
in step d) the second component (11) is connected to the first component (10) by welding in the region of the joint (15) of the first component (10).

## Revendications

1. Procédé permettant d'assembler un premier composant (10) avec un second composant (11) en un point d'assemblage (15) du premier composant (10), dans lequel le premier composant (10) présente au moins un premier élément de construction (12) réalisé à plat, un second élément de construction (13) réalisé à plat et une couche intermédiaire (14) présentant de la matière plastique et disposée au moins par zones entre les deux éléments de construction (12, 13), dans lequel le procédé présente les étapes suivantes :
a) chauffage du premier élément de construction (12) et/ou du second élément de construction (13) dans la zone du point d'assemblage (15) ; et
b) exercice d'une force de pression (16) sur le premier élément de construction (12) et/ou le second élément de construction (13) dans la zone du point d'assemblage (15), jusqu'à ce que la couche intermédiaire (14) ait été déplacée dans la zone du point d'assemblage (15) entre le premier élément de construction (12) et le second élément de construction (13) et qu'un contact soit établi entre le premier élément de construction (12) et le second élément de construction (13) dans la zone du point d'assemblage (15) ; et
c) application d'une tension électrique (17) au premier élément de construction (12) et au second élément de construction (13) dans la zone du point d'assemblage (15), jusqu'à ce que le premier élément de construction (12) et le second élément de construction adhèrent l'un à l'autre dans la zone du point d'assemblage (15) ; et
d) liaison du premier composant (10) au second composant (11) dans la zone du point d'assemblage (15) ;
**caractérisé en ce**
**que,** pendant l'étape c), une température dans la zone de contact entre le premier élément de construction (12) et le second élément de construction (13) ne s'élève pas au-dessus d'un seuil de température (21) prédéterminé, dans lequel le seuil de température (21) est inférieur au point de fusion d'un matériau du premier élément de construction (12) et inférieur au point de fusion d'un matériau du second élément de construction (13), dans lequel les étapes de procédé a) à c) sont désignées comme étapes de procédé pour la préparation des points d'assemblage, dans lequel l'étape d) comprend un processus d'assemblage en aval dans le temps entre le premier composant multicouche (10) et un autre, à savoir le second composant (11).

2. Procédé selon la revendication 1,
**caractérisé en ce**
**que** le seuil de température (21) prédéterminé est inférieur à 1600 °C, de préférence inférieur à 1530 °C, de manière particulièrement préférée inférieur à 1500 °C

3. Procédé selon la revendication 1 ou 2,
**caractérisé en ce**
**que** la tension électrique (17) est appliquée à l'étape c) jusqu'à ce que la couche intermédiaire (14) soit thermiquement détruite dans une première zone (18) adjacente au point d'assemblage (15) en raison d'un chauffage provoqué par un flux de courant électrique, de telle sorte que la couche intermédiaire (14) ne soit plus fluide même après refroidissement dans ladite première zone (18)

4. Procédé selon l'une des revendications précédentes,
**caractérisé en ce**
**que** l'on détecte à l'étape b) quand le contact entre le premier élément de construction (12) et le second élément de construction (13) est établi dans la zone du point d'assemblage (15), pour appliquer la tension électrique (17) à l'étape c).

5. Procédé selon la revendication 4,
**caractérisé en ce**
**que** la détection du contact entre le premier élément de construction (12) et le second élément de construction (13) est effectuée à l'aide d'une tension d'essai appliquée aux deux éléments de construction (12, 13) et/ou à l'aide d'une mesure de déplacement.

6. Procédé selon l'une des revendications précédentes,
**caractérisé en ce**
**que** les étapes a) à c) sont exécutées en continu le long d'une ligne prédéterminée du premier composant (10) afin de réaliser le point d'assemblage (15) en forme de bande.

7. Procédé selon l'une des revendications précédentes,
**caractérisé en ce**
**que,** à l'étape b), la force de pression (16) est exercée sur le premier élément de construction (12) de telle sorte qu'il se forme un creux (25) sur une surface du premier élément de construction (12) dans la zone du point d'assemblage (15), et la force de pression (16) est exercée sur le second élément de construction (13) de telle sorte qu'il reste une surface plane sur une surface du second élément de construction (13) dans la zone du point d'assemblage (15).

8. Procédé selon l'une des revendications précédentes,
**caractérisé en ce**
**qu'**à l'étape d), le second composant (11) est relié au premier composant (10) par soudage dans la zone du point d'assemblage (15) du premier composant (10).
